# EUROPÄISCHE PATENTANMELDUNG

(11) **EP 0 543 041 A1**
(43) Veröffentlichungstag der Anmeldung: **26.05.1993**
(21) Anmeldenummer: 91119832.3
(22) Anmeldetag: 21.11.1991
(51) Int. Cl.: C05F 17/00, C05F 17/02

(54) **Verfahren und Vorrichtung zur biologischen Umwandlung organischer Stoffe in Biomasse**

(71) Anmelder: Böhnensieker, Franz, D-59320 Ennigerloh (DE)
(72) Erfinder: Böhnensieker, Franz, D-59320 Ennigerloh (DE)
(74) Vertreter: Schmidt, Horst, Dr.

(57) **Zusammenfassung**

Ein Verfahren und eine Vorrichtung zur biologischen Umwandlung (Kompostierung) organischer Abfallstoffe, insbesondere aus Küchen- und Gaststättenbetrieben, sehen vor, dass die Behandlung in wenigstens zwei voneinander getrennten Kammern (7,8) erfolgt. In der ersten Kammer (7) werden die eingegebenen Abfallstoffe nur solange behandelt, bis deren Umwandlung in Biomasse bis zu einem bestimmten Zwischenstadium fortgeschritten ist. Ein Teil dieses teilweise umgewandelten Gutes wird sodann zur Fertigkompostierung in die zweite Kammer (8) überführt. In die erste Kammer (7) eingegebene neue Abfallstoffe werden zusammen mit dem verbleibenden Teil des teilweise umgewandelten Gutes behandelt. Wegen der stets hohen Anzahl aktiver Mikroorganismen in der ersten Kammer (7) wird der Prozess der Umwandlung der neu eingegebenen Abfallstoffe unverzüglich in Gang gesetzt. Vorzugsweise ist das die Kammern (7,8) enthaltende, wärmeisolierte Gehäuse (1) gezielt wechselseitig um eine horizontale Achse (3) zum Vermischen des Gutes drehbar und sind Mahlwerke (12,12') vorgesehen, um das Gut feinzuzerkleinern. Wenn erwünscht, kann eine Trocknung des kompostierten Gutes in einer dritten Kammer erfolgen. Mit der Vorrichtung lassen sich Abfallstoffe der genannten Art in verkürzter Zeit, z.B. ein bis zwei Tage, in einem quasi-kontinuierlichen Prozess in Biomasse umwandeln.

## Beschreibung

Die Erfindung betrifft ein Verfahren und eine Vorrichtung zur biologischen Umwandlung (Kompostierung) organischer Stoffe in Biomasse, indem die organischen Stoffe in einer im wesentlichen geschlossenen Umgebung eine Zeitlang durch Feinzerkleinern und Mischen behandelt werden.

Bekanntlich können organische Stoffe, insbesondere Abfallstoffe aus privaten Haushalten, Gaststättenbetrieben und dgl. in wiederverwendbare wertvolle Biomasse umgewandelt (kompostiert) werden. Es ist bekannt (DE-C-38 37 865), die Kompostierung in einem trommelförmigen Reaktionsbehälter durchzuführen, der zusammen mit einer separaten Aufbereitungsvorrichtung betrieben wird, in der das Gut vor Einführung in den Reaktionsbehälter auf eine geeignete Partikelgrösse zerkleinert wird, so dass die Kompostierung im Reaktionsbehälter mit verkürzter Startphase ablaufen kann. Dem Vorteil eines raschen Ablaufes der Umwandlungsreaktion steht eine relaliv aufwendige Anlage gegenüber, die für einen stationären Einsatz bei Gaststättenbetrieben und dgl. zumeist nicht geeignet ist. Bekannt ist es ferner, die Kompostierung in einem einstufigen Betrieb (DE-C-38 44 700) mit relativ kompakten Anlagen vorzunehmen, indem das Zerkleinern und Mischen des zu behandelnden Gutes in ein und demselben Reaktor solange betrieben wird, bis eine weitgehende Kompostierung erhalten wird. In diesem Zusammenhang ist es auch bekannt (vgl. z.B. DE-A-38 19 979), die einstufige Kompostierung in einer Drehtrommel durchzuführen. Die Drehtrommel kann ggf. in zwei Kammern unterteilt sein (US-A-38 37 180, DE-A-40 00 916), was einen wechselseitigen Betrieb ermöglicht, so dass auch kleinere Chargen behandelt werden können. Die einstufige chargenweise Kompostierung ist mit einer vergleichsweisen langen Behandlungszeit wegen der erforderlichen langen Anlaufzeit bei jeder Charge verbunden, selbst wenn, wie es ebenfalls schon vorgeschlagen wurde (GB-C-1 022 127), dem zu behandelnden Gut jedesmal eine geeignete Menge an Mikroorganismen zur Beschleunigung der Umwandlung zugesetzt wird. Häufig wird daher ein Produkt erhalten, das für die weitere Verwendung, z.B. in Gärtnereien und dgl., ohne Nachbehandlung ungeeignet ist. Andererseits haben Anlagen der letztgenannten Art aufgrund ihrer Kompaktheit den Vorteil, dass sie sich grundsätzlich für einen wirtschaftlichen stationären Einsatz am Ort der Abfallentstehung eignen.

Aufgabe der Erfindung ist die Schaffung eines Verfahrens und einer Vorrichtung der eingangs erwähnten Art, die geeignet sind, in einem quasi-kontinuierlichen Betrieb am Ort der Abfallentstehung die Umwandlung von Abfall in verwertbare Biomasse in verkürzter Behandlungszeit zu bewerkstelligen. Die Erfindung zielt insbesondere auf eine Verbesserung des biologischen Umwandlungsverfahren nach der DE-C-38 44 700 ab.

Zur Lösung der Aufgabe wird auf die kennzeichnenden Teile der Patentansprüche 1 und 9 verwiesen. Danach erfolgt die Behandlung des zu kompostierenden Gut in einer ersten Kammer nur solange, bis die Kompostierung ein bestimmtes Zwischenstadium erreicht hat. Ein Teil des bis zu diesem Zwischenstadium kompostierten Gutes wird sodann in eine zweiten Kammer überführt, wo die Kompostierung bis zum Endstadium weitergeführt wird, was mit einem Absterben der Mikroorganismen einhergeht. Der in der ersten Kammer verbleibende Teil an nur bis zum Zwischenstadium kompostiertem Gut stellt sicher, dass in dieser Kammer weiterhin eine hohe Anzahl an aktiven Mikroorganismen vorhanden ist, die zum Angriff bei neu in die erste Kammer eingegebenem Gut zur Verfügung stehen, um den Prozess der Umwandlung dieses Gutes unverzüglich in die Wege zu leiten. Die Erfindung ermöglicht daher ohne gelegentliche Hinzufügung von Mikroorganismen einen kontinuierlichen bzw. quasikontinuierlichen Kompostierungsbetrieb, indem nach einer gewissen Anlaufphase ständig neues Gutes in die erste Kammer eingeführt und teilweise kompostiertes Gut von der ersten in die zweite Kammer zur Fertigkompostierung überführt werden kann. In beiden Kammern wird das Gut kontinuierlich oder intervallmässig umgewälzt und miteinander vermischt, wobei diese Behandlung mit einer Feinzerkleinerung des Gutes einhergehen kann. Dadurch wird gewährleistet, dass die Abfallstoffe mit der Umgebungsluft in Berührung kommen und damit den Mikroorganismen stets ausreichend Sauerstoff für ihre Arbeit zur Verfügung steht. Die Umwandlung als exothermer Prozess ist mit der Entwicklung von Wärme verbunden. Diese kann zur Erwärmung der in die Kammern eingeführten Frischluft ausgenutzt werden, so dass auf die Zufuhr von Primärenergie zur Erwärmung der Frischluft weitestgehend verzichtet werden kann. Ausserdem sind die Kammern bzw. das Gehäuse gegenüber der Aussenumgebung wärmeisoliert. Diese Massnahme zusammen mit dem Umstand, dass das Umwälzen, Mischen und Zerkleinern des Gutes in einer geschlossenen Umgebung stattfindet, ermöglicht es, dass die bei der Umwandlung freiwerdende Prozesswärme bis zum Abschluss der Reaktion erhalten bleibt, d.h. für die Schaffung optimaler Umwandlungsbedingungen in den einzelnen Kammern zur Verfügung steht. Wenn erwünscht, kann überschüssige Prozesswärme ausserdem zu einer Trocknung der in der zweiten Kammer erhaltenen Biomasse in einer dritten Kammer ausgenutzt werden. Das erfindungsgemässe Verfahren ermöglicht eine besonders kompakte Ausbildung der Vorrichtung, mit der das Verfahren praktiziert werden kann. Eine bevorzugte Ausführung einer solchen Vorrichtung sieht vor, dass die beiden Kammern in an sich bekannter Weise um eine im wesentlichen horizontale Achse drehbar angeordnet sind. Das Mischen und Umwälzen des Gutes in den Kammern kann daher in besonders einfacher Weise durch wechselseitiges gesteuertes (gemeinsames) Drehen der Kammern bewerkstelligt werden. Ausserdem lässt sich mit einfachen Mitteln eine Überführung des Gutes von der ersten in die zweite Kammer vornehmen. Aufgrund ihrer kompaktheit eignet sich die Vorrichtung zum unmittelbaren Einsatz am Ort der Abfallentstehung, z.B. bei Gaststättenbetrieben und dgl., um relativ grosse Abfallmengen zu keiner weiteren Endbehandlung benötigender Biomasse verarbeiten zu können.

Die Erfindung wird nachfolgend anhand von Ausführungsformen und der Zeichnung näher erläutert. Es zeigen:
- Fig. 1: in perspektivischer, teilweise schematisierter Ansicht eine biologische Umwandlungsvorrichtung gemäss einer ersten Ausführungsform der Erfindung,
- Fig. 2: die Umwandlungsvorrichtung nach Fig. 1 in längsgeschnittener Ansicht zusammen mit einer schematischen Darstellung einer Steuereinrichtung zum Steuern der Funktionen der Umwandlungsvorrichtung,
- Fig. 3: in einer Ansicht ähnlich Fig. 2 eine modifizierte Umwandlungsvorrichtung mit zur Vereinfachung der Darstellung weggelassener Steuereinrichtung,
- Fig. 4: den Verlaufes der Temperatur und Feuchtigkeit bei der Umwandlungsvorrichtung nach Fig. 3,
- Fig. 5: in perspektivischer, teilweise schematischer Ansicht eine biologische Umwandlungsvorrichtung gemäss einer zweiten Ausführungsform der Erfindung.

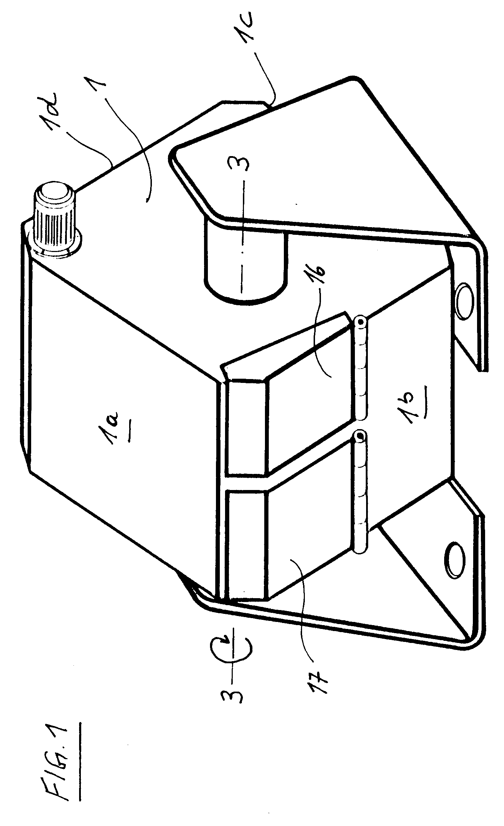

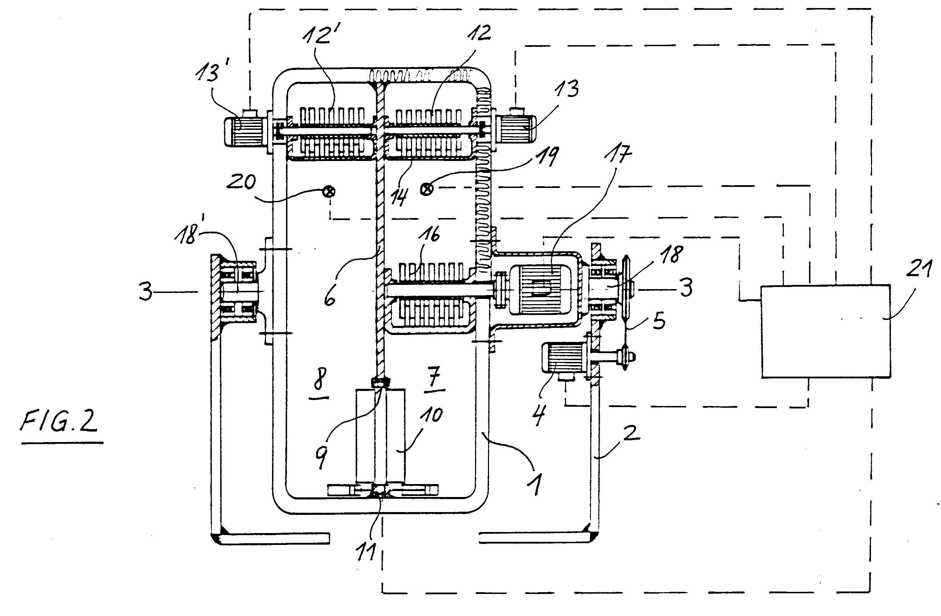

In Fig. 1 und 2, die eine eine erste Ausführungsform der Erfindung zeigen, bedeuten das Bezugszeichen 1 ein Gehäuse und das Bezugszeichen 2 ein Paar seitliche Rahmenteile, die zwischen sich eine horizontale Achse 3 definieren, um die das Gehäuse 1 durch die Rahmenteile 2 drehbeweglich gehalten ist.

An einer geeigneten Stelle längs des Umfanges des Gehäuses 1 ist ein Paar Öffnungen 16, 17 axial nebeneinander liegend vorgesehen, die durch die gezeigten Klappen verschlossen werden können.

Das Gehäuse 1 hat vorzugsweise, wie dargestellt, einen im wesentlichen unrunden Umriss mit z.B. vier im wesentlichen flachen Umfangswandbereichen 1a-1d, wobei angrenzende Paare dieser Umfangswandbereiche jeweils trichterförmige Sumpfbereiche im Inneren des Gehäuses 1 bilden, in denen sich das umzuwandelnde Gut ansammeln kann, wenn die betreffenden angrenzenden Umfangswandbereiche bei der Drehung nach unten weisen. Die Erfindung ist jedoch auf eine derartige Ausbildung des Gehäuses 1 nicht beschränkt. Vielmehr kann dieses auch eine runde oder andere als viereckige polygonale Umfangskonfiguration haben.

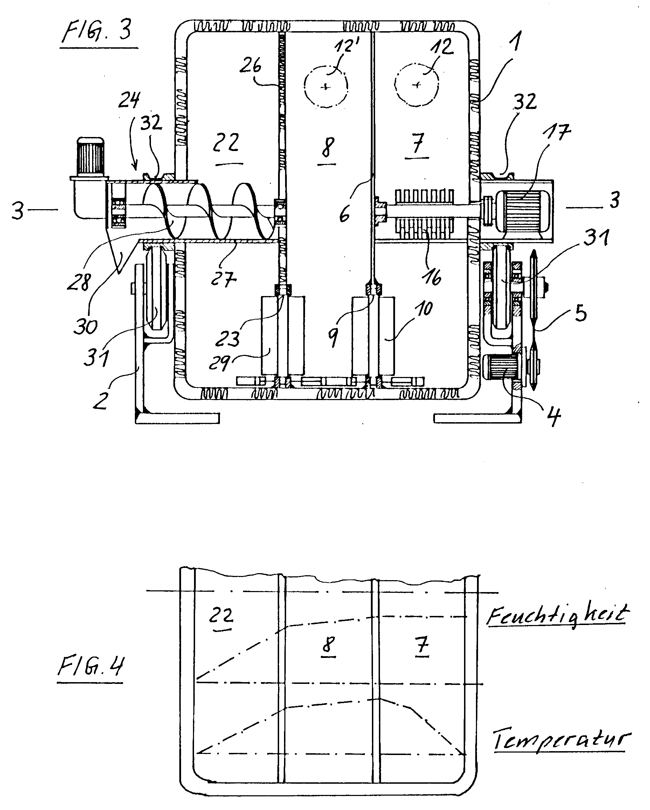

Wie Fig. 2 weiter zeigt, ist das Gehäuse 1 durch ein geeignetes Isolationsmaterial gegenüber der Aussenumgebung wärmeisoliert. Das Innere des Gehäuses 1 ist durch eine in Bezug auf die Achse 3 in einer radialen Ebene sich erstreckende Trennwand 6 in zwei in Axialrichtung nebeneinander liegende Gehäusebereiche oder Kammern 7, 8 unterteilt. Alternativ hierzu könnten auf der Achse 3 auch zwei selbständige Gehäuseeinheiten, die jeweils gegenüber der Aussenumgebung wärmeisoliert sind, angrenzend aneinander angeordnet sein. Ferner ist die Erfindung nicht auf ein Paar Gehäusebereiche bzw. -einheiten beschränkt. Vielmehr können auch weitere derartige Einheiten vorgesehen sein, wie dies z. B. in Fig. 3 gezeigt ist.

Über eine Passage oder Öffnung 9 in der Trennwand 6 sind die ansonsten im wesentlichen geschlossenen Gehäusebereiche 7, 8 miteinander verbunden. Die Verbindungspassage 9 kann mittels einer bei 10 angedeuteten Schliesseinrichtung gezielt geöffnet oder verschlossen werden. Obschon andere Einrichtungen vorgesehen sein können, umfasst die gezeigte Schliesseinrichtung ein in der Verbindungspassage 9 angeordnetes Schliesselement in Gestalt ener Drehklappe 10, die mittels eines geeigneten Betätigungsorganes 11, z.B. einer pneumatischen Kolbenzylindereinrichtung, zwischen einer Stellung, bei der die Verbindungspassage 9 geschlossen ist, und einer Stellung, bei der eine Verbindung zwischen den Gehäusebereichen 7 und 8 besteht, gedreht werden kann.

Die Verbindungspassage 9 ist, wie dargestellt, an einer radial aussenliegenden Stelle der Trennwand 6, vorzugsweise nahe einem Scheitelpunkt von zwei angrenzenden flachen Umfangswandbereichen 1a-1d des Gehäuses 1, vorgesehen, so dass sich im Bereich der Verbindungspassage 9 das zu behandelnde Gut bevorzugt ansammelt, wenn die Verbindungspassage 9 bei einer Drehung des Gehäuses 1 in eine unten liegende Position gelangt.

An einer radial aussenliegenden Stelle, z.B. diametral gegenüber der Verbindungspassage 9, ist im Inneren des ersten Gehäusebereiches 7 eine Zerkleinerungseinrichtung bzw. ein Mahlwerk 12 zum Feinzerkleinern des zu behandelnden Gutes vorgesehen. Das Mahlwerk 12 kann irgendeine geeignete Ausbildung haben. Bei der vorliegenden Ausführungsform umfasst das Mahlwerk 12 eine Vielzahl von Schneidelementen, die auf einer im Inneren des Gehäusebereiches 7 mittels einer Konsole 14 im wesentlich parallel zur Drehachse 3 gehaltenen Welle angeordnet sind. Ein derartiges Mahlwerk ist in der DE-U-87 14 138 beschrieben, auf die damit für weitere Details Bezug genommen werden kann. Mit einem aus dem Gehäuse 1 herausragenden Wellenende ist ein Antriebsmotor 13 gekoppelt, durch den die Welle und damit die Schneidelemente des Mahlwerkes in Drehbewegung versetzt werden können.

Obschon die diametrale Anordnung des Mahlwerkes 12 in Bezug auf die Verbindungspassage 9 bevorzugt wird, versteht es sich, dass das Mahlwerk 12 auch in einer nicht diametralen Beziehung zur Verbindungspassage 9 stehen kann, und dass ferner mehr als ein derartiges Mahlwerk 12, wenn erwünscht, im Inneren des ersten Gehäusebereiches 7 vorgesehen sein kann.

Wie ferner in Fig. 2 gezeigt ist, kann ein weiteres Mahlwerk 16 mit Antriebsmotor 17 mittig in Bezug auf die Drehachse 3 im Inneren des ersten Gehäusebereiches 7 angeordnet sein. Das Mahlwerk 16 ist vorzugsweise so ausgelegt, dass damit eine Grobzerkleinerung des in den Gehäusebereich 7 eingegebenen Gutes vorgenommen werden kann.

Im Inneren des zweiten Gehäusebereiches 8 kann ebenfalls eine Zerkleinerungseinrichtung vorgesehen sein. Das betreffende Mahlwerk 12' mit Antriebsmotor 13' kann dabei eine ähnliche Ausbildung haben wie das Mahlwerk 12 des ersten Gehäusebereiches 7. Obschon der Antrieb des Mahlwerkes 12' vorzugsweise unabhängig von dem des ersten Gehäusebereiches 7 ist, könnte auch ein gemeinsamer Antrieb für beide Mahlwerke 12, 12' vorgesehen sein, indem die Schneidelemente beider Mahlwerke 12, 12' auf einer gemeinsamen, beide Gehäusebereiche 7, 8 durchsetzenden Welle angeordnet sind.

Zur drehbaren Halterung um die Achse 3 weist das Gehäuse 1 an seinen gegenüberliegenden Stirnseiten Lagerzapfen 18, 18' auf, die in Lagern in den Rahmenteilen 2 gehalten sind. An einem der Lagerzapfen 18, 18' ist eine Antriebseinrichtung, bestehend aus einem Antriebsmotor 4 und einem Untersetzungsgetriebe 5, z.B. in Gestalt eines Kettentriebes, vorgesehen, um das Gehäuse 1 in Drehbewegung zu versetzen.

Das Bezugszeichen 21 betrifft eine Einrichtung zur Steuerung ein oder mehrerer der Funktionen wie der Drehbewegung des Gehäuses 1, der Stellung des Schliesselementes 10 der Verbindungspassage 9, des Betriebes der Mahlwerke 12, 12' und 16 etc.. Temperaturmessfühler 19 bzw. 20 zur Erfassung der in den Gehäusebereichen 7 und 8 herrschenden Temperaturen liefern entsprechende Signale an die Steuereinrichtung 21, um die erwähnten Funktionen in Abhängigkeit von den gemessenen Temperaturen zu steuern. Die Steuereinrichtung 21 kann ferner so ausgelegt sein, dass die Drehung des Gehäuses 1 bzw. der Betrieb der Mahlwerke sowie des Schliesselementes 10 der Verbindungspassage 9 in Abhängigkeit von der Zeit und den in den Gehäusebereichen 7, 8 gemessenen Temperaturen gesteuert wird.

Schliesslich ist darauf hinzuweisen, dass, obschon nicht dargestellt, eine Einrichtung vorgesehen ist, um Frischluft in erwärmtem Zustand ins Innere eines oder beider Gehäusebereiche 7, 8 einzuführen und/oder die darin befindliche Luft nach aussen abzuführen. Die Erwärmung der Frischluft erfolgt vorzugsweise unter Ausnutzung der bei der Umwandlung des Gutes entstehenden Prozesswärme, so dass auf eine Energiezufuhr von aussen ganz oder überwiegend verzichtet werden kann. Die Frischluftzu-/abfuhr- sowie Erwärmungseinrichtung kann entsprechend der DE-C-38 37 865 ausgebildet sein, so dass bezüglich Details auf diese Druckschrift verwiesen werden kann.

Die, wie vorbeschrieben, aufgebaute Umwandlungsvorrichtung arbeitet wie folgt:
Das zu behandelnde Gut, bei dem es sich um biologisch abbaubare Abfälle aller Art, insbesondere Abfälle aus Küchen- und Gaststättenbetrieben, handeln kann, wird vorzugsweise in vorzerkleinerter Form über die Einlassöffnung 16 in den ersten Gehäusebereich 7 eingegeben. Sobald ein geeigneter Füllungsgrad von z.B. 60 bis 70 % erreicht ist, wird die Einlassöffnung 16 verschlossen und an den Antriebsmotor 4 ein Befehl zur Drehung des Gehäuses 1 gegeben. Während der Drehung wird das im ersten Gehäusebereich 7 befindliche Gut ständig umgewälzt. Damit verbunden sein kann, wenn erwünscht, eine weitere Grobzerkleinerung des Gutes mittels des zentralen Mahlwerkes 16, um das Gut in eine Partikelgrösse zu bringen, die für eine weitere Verarbeitung durch das Feinmahlwerk 12 geeignet ist.

Das eingegebene Gut wird unter kontinuierlichem oder intervallmässigem wechselseitigen Drehen des Gehäuses 1 eine Zeitlang umgewälzt und vermischt. Da während der Drehung des Gehäuses 1 das radial aussenliegende Feinmahlwerk 12 wiederholt durch das eingegebene Gut hindurchbewegt wird, erfährt dieses eine weitere Zerkleinerung bis zu einer für die Umwandlung geeigneten Partikelgrösse. Das Grobmahlwerk 16 kann nach einer geeigneten Zeit abgestellt werden.

Die Umwandlung des Gutes im ersten Gehäusebereich 7 geht mit einem Anstieg der Temperatur einher. Wegen der Isolierung des Gehäuses 1 kann erreicht werden, dass die Umwandlung im wesentlichen ohne Wärmeverluste an die Umgebung abläuft. Zur Einhaltung von für die Aktivität der Mikroorganismen günstigen Umwandlungsbedingungen kann ins Innere des Gehäusebereiches 7 kontinuierlich oder von Zeit zu Zeit erwärmte Frischluft eingeführt werden.

Die Umwandlung des Gutes im ersten Gehäusebereich 7 wird erfindungsgemäss nur solange fortgesetzt, bis festgestellt wird, dass die Temperatur nicht mehr ansteigt (Ende der Umwandlungs-Startphase). Unmittelbar danach oder nach Verstreichen einer geeigneten Zeitdauer von z.B. einigen Stunden wird von der Steuereinrichtung 21 an das Betätigungsorgan 11 des Schliesselementes 10 ein Befehl gesandt, um das Schliesselement 10 in eine Stellung zu bringen, bei der eine Verbindung zwischen dem Inneren der ersten und zweiten Gehäusebereiche 7, 8 zustande kommt. Das Schliesselement 10 kann dabei wie eine Leitschaufel wirken, indem es bei einer Drehung des Gehäuses 1 in eine Richtung das im ersten Gehäusebereich 7 befindliche Gut durch die Verbindungspassage 9 in den zweiten Gehäusebereich 8 pflugscharartig einleiten kann.

Erfindungsgemäss wird nicht die gesamte Menge an Gut im ersten Gehäusebereich 7 in den zweiten Gehäusebereich 8 überführt, sondern nur eine geeignete Teilmenge, die zwischen etwa 30 und 70 % der Füllung des ersten Gehäusebereiches 7 betragen kann. Der Anteil an überführtem zu zurückbleibendem Gut kann je nach Art des zu behandelnden Gutes variieren. Für biologisch abbaubare Abfälle aus Küchen und Gaststättenbetrieben wurde festgestellt, dass gute Ergebnisse bei einer Überführung von ca. 50 % des im ersten Gehäusebereich 7 befindlichen, bis zu einem Zwischenstadium umgewandelten Gutes erzielt werden.

Nach der Überführung des Gutes in den zweiten Gehäusebereich 8 wird die Verbindungspassage 9 wieder geschlossen und kann in das Innere des ersten Gehäusebereiches 7 über die Einlassöffnung 16 wieder neues unbehandeltes Gut bis zu dem gewünschten Füllungsgrad eingegeben werden, so dass im ersten Gehäusebereich 7 sowohl unbehandeltes als teilweise umgewandeltes Gut vorhanden ist.

Unter weiterer Mischung und Umwälzung sowie Zerkleinerung des in den Gehäusebereichen 7, 8 befindlichen Gutes wird die Kompostierungsbehandlung fortgesetzt. Insbesondere erfolgt im zweiten Gehäusebereich 8 die Fertigkompostierung des darin eingeführten, teilweise kompostierten Gutes in Biomasse. Ein Mass für die Beendigung des Umwandlungsprozesses im zweiten Gehäusebereich 8 ist ein Absenken der darin herrschenden Temperatur von einem gemessenen Maximum. Das Absinken der Temperatur zeigt an, dass die Aktivität der Mikroorganismen allmählich zum Erliegen kommt. Es wurde festgestellt, dass die Umwandlung im wesentlichen als abgeschlossen angesehen werden und eine Entnahme des Gutes aus dem zweiten Gehäusebereich 8 über die Auslassöffnung 17 erfolgen kann, wenn die Temperatur im zweiten Gehäusebereich 8 um etwa 20 % vom gemessenen Maximalwert abgefallen ist. Die gemessene maximale Temperatur in den Gehäusebereichen 7 und 8 hängt vom Zustand und der Art des zu behandelnden Gutes ab und kann z.B. zwischen 60^{o} und 75^{o} C betragen.

Dadurch, dass die Umwandlung im ersten Gehäusebereich 7 nur bis zu einem Zwischenstadium zugelassen wird, ist in diesem Gehäusebereich stets eine ausreichende Menge an aktiven Mikroorganismen vorhanden, die dafür sorgen, dass der Prozess der Umwandlung des neu eingegebenen Gutes (Startphase) umgehend in Gang gesetzt wird. Ein wesentliches Merkmal der Erfindung ist daher die Aufteilung des Umwandlungsprozesses in eine Start- und Fertigphase, die im wesentlichen getrennt, d.h. ohne gegenseitige Beeinflussung ablaufen.

In manchen Fällen kann es erforderlich oder gewünscht sein, dass die erhaltene Biomasse einem nachfolgenden Trocknungsprozess unterzogen wird. Dies kann erfindungsgemäss dadurch erreicht werden, dass man dem ersten und zweiten Gehäusebereich 7, 8 einen weiteren dritten Gehäusebereich hinzufügt, wie dies in Fig. 3 gezeigt ist. Der dritte Gehäusebereich 22 kann im wesentlichen wie die vorhergehenden Gehäusebereiche 7, 8 aufgebaut sein. Er braucht jedoch kein Mahlwerk zu enthalten. Einrichtungen (nicht gezeigt) sind vorgesehen, um in den dritten Gehäusebereich 22 erwärmte Luft einzuführen und die Luft zusammen mit der aufgenommenen Feuchtigkeit nach aussen abzuführen, was ein Trocknen des im dritten Gehäusebereich 22 befindlichen Gutes unter gleichzeitiger Absenkung von dessen Temperatur bewirkt.

Eine Verbindungspassage 23 in einer Trennwand 26 mit einer Schliesseinrichtung 29 ähnlich der zwischen dem ersten und zweiten Gehäusebereich 7, 8 ermöglicht eine gezielte Überführung des kompostierten Gutes von dem zweiten in den dritten Gehäusebereich 22. Vorgesehen sein kann ferner eine Austragseinrichtung 24, um das getrocknete kompostierte Gut aus dem dritten Gehäusebereich 22 nach aussen zu befördern. Die Austragseinrichtung 24 kann, wie dargestellt, eine in einem konzentrisch zur Drehachse 3 sich erstreckenden Zylindergehäuse 27 angeordnete Förderschnecke 28 umfassen, die durch einen Antriebsmotor gezielt angetrieben werden kann, um das Gut aus dem Inneren des Gehäusebereiches 22 zu einer Auslassöffnung 30 zu bewegen.

Fig. 3 zeigt ferner eine modifizierte Ausbildung der Einrichtung zum Drehen des Gehäuses 1 um die Drehachse 3 mittels seitlich des Gehäuses gelagerter angetriebener Rollen 31, auf denen sich mit den Gehäuseseitenwänden verbundene Radkränze 32 antriebsmässig abstützen, so dass eine Drehung der Rollen 31 eine ensprechende Drehung des Gehäuses 1 bewirkt.

Mit den Bezugszeichen 12, 12' sind Mahlwerke angedeutet, die anders als bei der vorbeschriebenen Ausführungsform von der Umfangsseite des Gehäuses 1 ins Innere der Gehäusebereiche 7, 8 ragen. Bezüglich weiterer Details der Ausführungsform der Erfindung nach Fig. 3 kann im übrigen auf die vorbeschriebene erste Ausführungsform verwiesen werden.

Fig. 4 zeigt den Verlauf der Temperatur und der Feuchtigkeit des zu behandelnden Gutes in den einzelnen Gehäusebereichen 7, 8, 22. Wie zu erkennen ist, findet die Umwandlung im ersten und zweiten Gehäusebereich 7 und 8, d.h. während der Start- und Fertigphase, im wesentlichen ohne Wärmeverluste an die Umgebung und bei im wesentlichen gleichbleibendem Feuchtigkeitsgehalt des zu behandelnden Gutes statt.

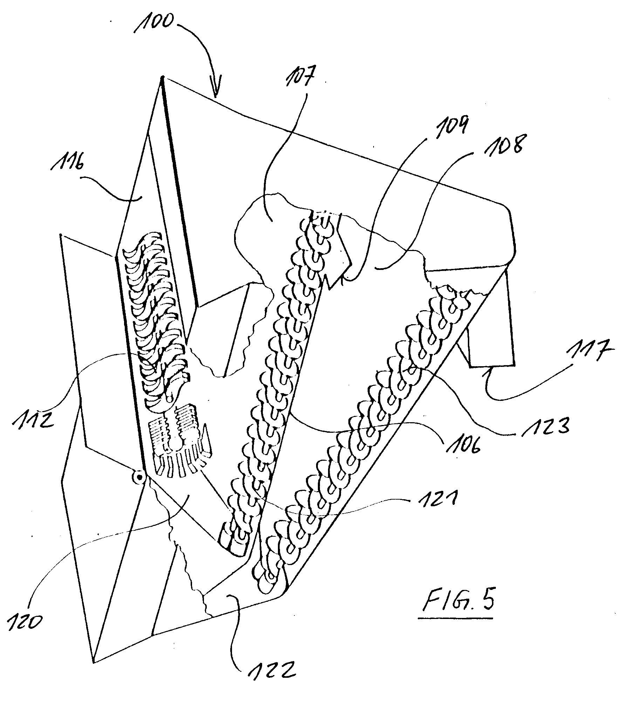

Die in Fig. 5 gezeigte zweite Ausführungsform der Erfindung hat im Gegensatz zu der vorerwähnten Ausführungsform eine im wesentlichen vertikale Ausrichtung. Sie umfasst ein wärmeisoliertes Gehäuse 100 mit einer an seiner Vorderseite vorgesehenen verschliessbaren Einlassöffnung 116, die einen Zugang zu einem ersten Gehäusebereich 107 schafft. Im ersten Gehäusebereich 107 ist ein Mahlwerk 112 zum Feinzerkleinern des eingegebenen Gutes vorgesehen. Der ersten Gehäusebereich 107 wird durch eine Trennwand 106 definiert, die das Innere des Gehäuses 100 in zwei voneinander getrennte Bereiche 107, 108 mit jeweils im wesentlichen vertikaler Erstreckung unterteilt.

Am unteren Abschnitt jedes Gehäusebereiches 107, 108 ist ein Sumpf 120 bzw. 122 ausgebildet, in denen sich das zu behandelnde Gut sammeln kann. In jedem Gehäusebereich 107, 108 ist eine Fördereinrichtung in Gestalt z.B. einer Förderschnecke 121, 123 angeordnet, die das Gut aus dem jeweiligen Sumpf 120 bzw. 122 nach oben bewegt, so dass dieses von einem niedrigen, im wesentlichen durch den Sumpf 120 bzw. 122 definierten Niveau auf eine höheres Niveau bewegt werden kann, von wo es in freiem Fall zurück auf das niedrige Niveau fallen kann.

Insbesondere liegt das höhere Niveau des ersten Gehäusebereiches 107 im Bereich einer Übergabe- oder Verbindungspassage 109, die den ersten und zweiten Gehäusebereich 107, 108 miteinander verbindet, und das des zweiten Gehäusebereiches 108 im Bereich einer Auslassöffnung 117. Die Verbindungspassage 109 sowie die Auslassöffnung 117 können durch geeignete nicht gezeigte Schliesseinrichtungen gezielt geschlossen oder geöffnet werden.

Nicht dargestellt sind im übrigen Einrichtungen zur Zufuhr erwärmter Frischluft in die Gehäusebereiche 107, 108 sowie zur Steuerung des Betriebes des Mahlwerkes 112, der Förderschnecken 121, 123, sowie der nicht gezeigten Einrichtungen zum Öffnen und Schliessen der Verbindungspassage 109 und der Auslassöffnung 117. Diese Einrichtungen und andere Details können analog zu denen der vorerwähnten in Fig. 1 und 2 gezeigten Ausführungsform ausgebildet sein, so dass hierauf verwiesen werden kann.

Die Arbeitsweise der zweiten Ausführungsform der Erfindung entspricht im wesentlichen der der vorbeschriebenen. Insbesondere erfolgt die Umwandlung des zu behandelnden Gutes in zwei Stufen, indem sie im ersten Gehäusebereich 107 nur bis zu einem bestimmten Zwischenstadium zugelassen wird und erst im zweiten Gehäusebereich 108 zu einem Abschluss gebracht wird, wobei ein Teil des teilweise umgewandelten Gutes im ersten Gehäusebereich 107 verbleibt. Dadurch ist gewährleistet, dass im ersten Gehäusebereich 107 stets eine genügende Menge an aktiven Mikroorganismen vorhanden ist, um die Umwandlung von neu eingegebenem Gut unter entsprechender Verkürzung der Behandlungszeit sofort in Gang zu setzen. Im Unterschied zu der vorerwähnten Ausführungsform erfolgt das Umwenden und Mischen des zu behandelnden Gutes hier jedoch durch Bewegung des Gutes zwischen Stellen höheren und niedrigeren Niveaus mit einer durch freien Fall gekennzeichneten Bewegungszwischenphase.

Es versteht sich, dass die Erfindung nicht auf die beschriebenen und gezeigten Ausführungsbeispiele beschränkt ist, sondern auch solche Alternativen und Modifikationen umfasst, die sich dem Fachmann anhand der gegebenen Lehre anbieten.

## Patentansprüche

1. Verfahren zur biologischen Umwandlung (Kompostierung) organischer Stoffe in Biomasse, indem die organischen Stoffe in einer im wesentlichen geschlossenen Umgebung eine Zeitlang durch Feinzerkleinern und Mischen behandelt werden, dadurch gekennzeichnet, dass
a) die Behandlung in wenigstens zwei voneinander getrennten, in sich im wesentlichen geschlossenen Kammern vorgenommen wird, wobei
b) die in einer ersten Kammer eingegebenen organischen Stoffe nur solange behandelt werden, bis deren Umwandlung in Biomasse bis zu einem bestimmten Zwischenstadium fortgeschritten ist, und
c) ein Teil des bis zum Zwischenstadium umgewandelten Gutes zur Fertigkompostierung aus der ersten in eine zweite Kammer überführt wird, so dass
d) die Behandlung neu eingegebener organischer Stoffe in der ersten Kammer in Gegenwart eines verbleibenden Teiles des bis zum Zwischenstadium umgewandelten Gutes erfolgt.

2. Verfahren nach Anspruch 1, dadurch gekennzeichnet, dass die Überführung des teilweise umgewandelten Gutes von der ersten an die zweite Kammer und die Entnahme von Biomasse aus der zweiten Kammer in Abhängigkeit von den in den Kammern gemessenen Temperaturen gesteuert wird.

3. Verfahren nach Anspruch 2, dadurch gekennzeichnet, dass die Überführung eine bestimmte Zeitlang nach Erreichen eines Temperaturmaximums in der ersten Kammer vorgenommen wird.

4. Verfahren nach Anspruch 2, dadurch gekennzeichnet, dass die Entnahme frühestens erfolgt, wenn die Temperatur in der zweiten Kammer von einem Maximum um ein bestimmtes Mass abgesunken ist.

5. Verfahren nach einem der vorhergehenden Ansprüche, dadurch gekennzeichnet, dass ein Anteil zwischen etwa 30 und 70 %, vorzugsweise etwa 50 %, des bis zum Zwischenstadium umgewandelten Gutes in die zweite Kammer überführt wird.

6. Verfahren nach einem der vorhergehenden Ansprüche, dadurch gekennzeichnet, dass die Behandlung unter Zufuhr von erwärmter Frischluft erfolgt.

7. Verfahren nach einem der vorhergehenden Ansprüche, dadurch gekennzeichnet, dass die Behandlung in Gegenwart der bei der Umwandlung entstehenden Prozesswärme oder unter deren wesentlicher Ausnutzung vorgenommen wird.

8. Verfahren nach einem der vorhergehenden Ansprüche, dadurch gekennzeichnet, dass das in der zweiten Kammer kompostierte Gut bzw. die Biomasse zur Trocknung mittels erwärmter Luft in eine dritte Kammer überführt wird.

9. Vorrichtung zur Durchführung des Verfahrens nach Anspruch 1, bestehend aus einem im wesentlichen geschlossenen Gehäuse mit einer Ein- und Auslassöffnung, einer Einrichtung zum Feinzerkleinern und einer Einrichtung zum Mischen der im Gehäuse befindlichen organischen Stoffe, dadurch gekennzeichnet,
a) dass das Gehäuse (1,101) wenigstens zwei voneinander getrennte, im wesentlichen geschlossene Gehäusebereiche (7,8,107,108) umfasst, von denen ein erster die Einlassöffnung (16,116) und ein zweiter die Auslassöffnung (17,117) aufweist,
b) dass eine Verbindungspassage (9,109) mit einer Einrichtung zu deren Öffnen und Schliessen zwischen dem ersten und zweiten Gehäusebereich vorgesehen ist,
c) dass die Zerkleinerungseinrichtung wenigstens ein Mahlwerk (12,112) wenigstens im ersten Gehäusebereich umfasst, und
d) dass die Mischeinrichtung (4,5,18,121,123) zum Mischen des in beiden Gehäusebereichen befindlichen Gutes ausgelegt ist.

10. Vorrichtung nach Anspruch 9, gekennzeichnet durch eine Einrichtung (21) zum Steuern des Öffnens und Schliessens der Verbindungspassage (9,109), der Zerkleinerungseinrichtung (12,112) und der Mischeinrichtung.

11. Vorrichtung nach Anspruch 9 oder 10, dadurch gekennzeichnet, dass die Gehäusebereiche (7,8) um eine im wesentlichen horizontale Drehachse (3) drehbar sind.

12. Vorrichtung nach Anspruch 11, dadurch gekennzeichnet, dass das wenigstens eine Mahlwerk (12) in einem radialen Abstand von der Drehachse (3) im ersten Gehäusebereich (7) angeordnet ist.

13. Vorrichtung nach Anspruch 11 und 12, dadurch gekennzeichnet, dass ein weiteres Mahlwerk (12') im zweiten Gehäusebereich (8) angordnet ist.

14. Vorrichtung nach einem der Ansprüche 11 bis 13, dadurch gekennzeichnet, dass die Verbindungspassage (9) zwischen dem ersten und zweiten Gehäusebereich (7,8) in einem radialen Abstand von der Drehachse (3) angordnet ist.

15. Vorrichtung nach Anspruch 9 oder 10, dadurch gekennzeichnet, dass die Verbindungspassage (109) und die Auslassöffnung (117) jeweils auf einem höheren Niveau als ein im unteren Bereich jedes Gehäusebereiches (107,108) vorgesehener Sumpf (120,122) liegen, und dass Fördereinrichtungen (121,123) vorgesehen sind, um das Gut vom Sumpf zum höheren Niveau jedes Gehäusebereiches zu bewegen.

16. Vorrichtung nach einem der Ansprüche 9 bis 15, gekennzeichnet durch einen dritten, im wesentlichen geschlossenen Gehäusebereich (22), in den das Gut aus dem zweiten Gehäusebereich (8) zur Trocknung einführbar ist.

17. Vorrichtung nach einem der Ansprüche 9 bis 16, dadurch gekennzeichnet, dass jeder Gehäusebereich (7,8,22,107,108) wärmeisoliert ist.

18. Vorrichtung nach einem der Ansprüche 9 bis 17, gekennzeichnet durch eine Einrichtung zur Bereitung von unter Ausnutzung der Prozesswärme erwärmter Frischluft und zu deren Zufuhr in einen oder mehrere der Gehäusebereiche (7,8,22,107,108).
